(19) Europäisches Patentamt
European Patent Office
Office européen des brevets

(11) EP 1 597 093 B1

(12) **EUROPEAN PATENT SPECIFICATION**

(45) Date of publication and mention of the grant of the patent:
**04.03.2009 Bulletin 2009/10**

(21) Application number: **03767722.6**

(22) Date of filing: **02.12.2003**

(51) Int Cl.:
***B60C 9/18*** *(2006.01)* ***B60C 1/00*** *(2006.01)*
***B29D 30/00*** *(2006.01)*

(86) International application number:
**PCT/EP2003/013559**

(87) International publication number:
**WO 2004/056587 (08.07.2004 Gazette 2004/28)**

(54) **TYRE FOR TWO-WHEELED VEHICLES**

REIFEN FÜR ZWEIRADFAHRZEUGE

PNEUMATIQUE POUR VEHICULES A DEUX-ROUES

(84) Designated Contracting States:
**AT BE BG CH CY CZ DE DK EE ES FI FR GB GR HU IE IT LI LU MC NL PT RO SE SI SK TR**

(30) Priority: **23.12.2002 PCT/EP02/14717**

(43) Date of publication of application:
**23.11.2005 Bulletin 2005/47**

(73) Proprietor: **Pirelli Tyre S.p.A.**
**20126 Milano (IT)**

(72) Inventors:
- **GALIMBERTI, Maurizio**
**I-20133 Milano (IT)**
- **FINO, Luigi**
**I-20030 Bovisio Masciago (IT)**
- **DESSANTI, Francesca**
**I-07100 Sassari (SS) (IT)**

(74) Representative: **Giannesi, Pier Giovanni**
**Pirelli Pneumatici S.p.A.,**
**Viale Sarca, 222**
**20126 Milan (IT)**

(56) References cited:
**EP-A- 0 747 323** **EP-A- 1 193 085**
**US-A- 3 686 113** **US-A- 4 431 755**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 597 093 B1

## Description

The present invention relates to a tyre for two-wheeled vehicles.

More particularly, the present invention relates to a tyre for two-wheeled vehicles comprising at least one layer of a crosslinked elastomeric material comprising at least one layered inorganic material.

The present invention moreover relates to a process for manufacturing said tyre.

In the field of production of tyres for two-wheeled vehicles, in particular those intended for equipping the so-called high-performance "touring" motorcycles or the race motorcycles, the need is increasingly felt of providing ever higher performances in terms of road behaviour both in straight stretch and in cornering, stability of the vehicle at high speed, kilometric yield, wear uniformity and regularity, and low weight.

Said tyres are characterized by a high transverse curvature in order to provide good contact with the road surface when the motorcycles are steeply banked in cornering. Maintenance of a consistent ground contact area of "tyre footprint" under all conditions is a major problem in determining general vehicle handling.

Of particular importance, particularly in race motorcycles tyres, is the provision of high cornering power along with good stability to maximise cornering speeds under race conditions and the maintenance of tyre shape and footprint under conditions of heavy braking.

Attempts have been made in the prior art in order to satisfy the above reported needs.

For example, European Patent Application EP 703 102 relates to a motorcycle tyre comprising a tread reinforced between its edges by a breaker assembly and having in its normal inflated fitted condition a camber value C/L of between 0.5 and 0.7, a reinforcing carcass ply of rubber covered cords radially inside the breaker assembly and extending between two bead regions and wrapped in each bead region around an annular bead wire to form carcass ply turn-ups and between the tread edges and bead regions, tyre sidewalls, characterized in that under the tread is disposed radially inward of the breaker assembly a secondary carcass ply of rubber covered cords and between the carcass ply and the secondary carcass ply is disposed a rubber member extending from tread edge to tread edge. The resultant tyres would have not only an improved cornering power, damping and grip but also they would be stable and able to effectively resist collapse under severe breaking.

British Patent Application GB 2 283 215 relates to a radial motorcycle tyre comprising a tread reinforced between its edges by a breaker assembly and a bandage and having in its normally inflated condition a camber value C/L of between 0.5 to 0.7, a reinforcing carcass ply of radially disposed cords extending radially inside the breaker assembly and between two bead regions and wrapped in each bead region around an annular bead wire from the axial inside to the outside to form carcass ply turn-ups and between the tread edges and bead regions, tyre sidewalls, characterized in that the breaker assembly comprises two breaker plies comprising aromatic polyamide cords oppositely inclined at between 16 and 30 degrees with respect to the circumferential direction of the tyre and the bandage comprises nylon cords reinforced material, e.g. up to eight nylon cords side by side, and is formed radially outside and adjacent to the breaker assembly and is inclined at less than 5 degrees to the circumferential direction. The resultant tyres would have improved cornering power and stability under all conditions and improved grip. This tyre would show also superior fatigue life.

European Patent Application 1 193 085 relates to a substantially open toroidaly shaped pneumatic rubber tire characterized by being comprised of a carcass which supports a circumferential tread designed to be ground contacting and which contains two spaced apart, relatively inextensible bead portions, and two sidewall portions which individually extend from each of said bead portions to the tire tread;
wherein said carcass is comprised of at least one carcass ply extending from bead to bead, and optionally at least one belt ply extending circumferentially around said carcass and positioned between said tread and said carcass plies;
wherein said carcass plies and belt plies are individually comprised of a laminate of a rubber composition and a plurality of spaced apart cords disposed in a substantially parallel relationship to each other, wherein said rubber composition encapsulates said cords, and wherein said cords are comprised of one or more filaments, wherein said filaments are selected from brass coated steel filaments, polyester filaments, nylon filaments, aramid filaments and glass filaments;
wherein said carcass optionally contains an apex as a strip of a rubber composition in a shape of an annular ring positioned within a carcass sidewall adjacent to a bead portion of the carcass in a primary annular direction circumferentially co-extensive within the sidewall portion of the carcass and a secondary radial direction extending toward and spaced apart from the tire tread,
wherein said carcass optionally contains a sidewall insert as a strip of a rubber composition in a shape of an annular ring spaced positioned within a carcass sidewall and spaced apart from a carcass bead portion in a primary annular direction circumferentially co-extensive within the sidewall portion of the carcass and a secondary radial direction extending toward and spaced apart from the tire tread;
wherein said rubber composition for said rubber/cord laminate, sidewall insert and said apex, is comprised of, based upon parts by weight of an ingredient per 100 parts by weight elastomer (phr):

(A) 100 phr of at least one diene-based elastomer, and
(B) 30 to 100 phr of particulate reinforcement dispersed within said elastomer(s) selected from intercalated smectite clay particles, carbon black, synthetic amorphous silica and silica treated carbon black comprised of:

(1) 1 to 10 phr of said intercalated, layered, thin, substantially two dimensional smectite clay particles of which at least a portion thereof in in a form of thin, flat, substantially two dimensional exfoliated platelets derived from said intercalated clay, and
(2) 20 to 99 phr of at least one additional reinforcing filler comprised of carbon black, synthetic amorphous silica and silica treated carbon black,

wherein, for the rubber composition of said rubber/cord laminate of said carcass ply and carcass belt ply, a majority of said dispersed smectite intercalated clay particles and exfoliated platelets have a primary orientation in the plane of the laminate and substantially parallel to said cords and a secondary orientation in the plane of the laminate and substantially at right angles to said cords;
wherein for the rubber composition of said annular sidewall insert strip and annular apex strip, a majority of said dispersed smectite clay particles and exfoliated platelets have a primary orientation in the plane of the strip and substantially parallel to the annular direction of said strip(s) and a secondary orientation in the plane of the strip and substantially at right angles to the annular direction of said strip (s).

The use of the abovementioned rubber composition containing smectite clay particles is said to give a stiff rubber for use as a tire component with only small increase in its Tan Delta value.

European Patent Application EP 747 323 relates to intercalates formed by mixing the phyllosilicate with a polymer and a liquid carrier, and extruding the mixture through a die-opening to adsorb or intercalate the polymer between adjacent phyllosilicate platelets. Sufficient polymer is adsorbed between adjacent phyllosilicate platelets to expand the adjacent platelets to a spacing of at least about 10 Å (as measured after water removal), up to about 55 Å and preferably in the range of about 30-40 Å, so that the intercalate easily can be exfoliated into individual platelets by heating the polymer to its melting point, to provide a matrix polymer/platelet composite material. The resulting matrix polymer/platelet composite materials are said to be useful wherever polymer/filler composite materials are used, for example, as external body parts for the automotive industry; heat-resistant polymeric automotive parts in contact with an engine block; tire cord for radial tires; food wrap having improved gas impermeability; electric components; food grade drink containers; and any other use where it is desired to alter one or more physical properties of a matrix polymer, such as elasticity and temperature characteristics, e.g., glass transition temperature and high temperature resistance.

A type for two-wheeled vehicles in accordance with the preamble of claim 1 and a process in accordance with the preamble of claim 29 are known from EP-A- 756 949.

US Patent 6 412 533 relates to a tyre comprising:

a) a carcass structure including at least one ply provided with reinforcing cords essentially parallel to one another and oriented along directions inclined with respect to the equatorial plane of the tyre;
b) a belt structure coaxially extending around the carcass structure, including:

i) a radially inner layer comprising at least one sheet made of an elastomeric material;
ii) a radially outer layer including a plurality of circumferential coils, axially arranged side by side, of at least one inextensible cord, circumferentially wound at a substantially null angle with respect to the equatorial plane of the tyre;

c) a tread coaxially extending around the belt structure.

Preferably, said sheet made of an elastomeric material incorporates appropriate binding means suitable to increase its stretcheability properties without substantially altering the adhesion properties of the elastomeric material in the green state. More preferably, said binding means comprise the so-called aramid pulp (short fibrillated fibers of poly-paraphenylene-terephthalamide), of the type commercially known as "Kevlar®-pulp" from DuPont or "Twaron®-pulp" from Akzo. Preferably, said short fibrillated fibers are preoriented, for instance by means of a calendering operation, according to the main direction of the forces which the supporting element is subjected during the tyre manufacturing process. Such direction is usually the circumferential direction of the tyre and said preorientation is preferably carried out by calendering said sheet during its manufacture. By interposing a sheet made of an elastomeric material between the carcass structure and the radially outer layer provided with zero-degree cords of the belt structure, it would be possible to achieve at the same time both the desired features of road holding and curve stability imparted to the tyre by the carcass structure, and the desired features of confort, wear regularity and uniformity and stability of the vehicle

at high speeds in straight stretches, imparted to the tyre by the zero-degree cord layer of the belt structure.

The Applicant has noticed that, the use of a layer made of an elastomeric material comprising short fibrillated fiber of poly-paraphenylene-terephthalamide associated with the belt structure as disclosed above, gives to the motorcycle tyre essentially a longitudinal reinforcement (e.g. said reinforcement is essentially in the circumferential direction of the tyre). However, according to the Applicant, a transversal reinforcement is also important to achieve a reliable behaviour of the motorcycle tyre, particularly during bending when the tyre is subjected to remarkable transversal forces.

The Applicant has now found that it is possible to give an effective reinforcement, both in longitudinal and in transversal direction, under the tread of a motorcycle tyre, by using at least one layer of a crosslinked elastomeric material comprising at least one layered inorganic material, associated with a belt structure.

According to a first aspect, the present invention thus relates to a tyre for two-wheeled vehicles according to claim 1

The said at least one layered inorganic material has preferably, an individual layer thickness of from 0.05 nm to 15 nm.

According to one preferred embodiment, said at least one layer of a crosslinked elastomeric material is placed between said carcass structure and said at least one layer of a plurality of circumferential coils.

According to a further preferred embodiment, said at least one layer of a crosslinked elastomeric material is placed between said tread band and said at least one layer of a plurality of circumferential coils.

According to a further aspect, the present invention relates to a process for producing a tyre for two-wheeled vehicles according to claim 29.

(b) The said at least one layered inorganic material has preferably an individual layer thickness of from 0.05 nm to 15 nm.

According to a further preferred embodiment, said at least one layer of a crosslinkable elastomeric material is obtained by winding at least one ribbon-like band consisting of said crosslinkable elastomeric material in side by side coils. Said ribbon-like band may be produced, for example, by extruding said crosslinkable elastomeric material.

Further details of the methods of forming and/or depositing the various components of the tyre on a toroidal support are described, for example, in International Patent application WO 01/36185 and in European Patent EP 976 536 in the name of the same Applicant.

According to one preferred embodiment, said layered inorganic material (b) is intercalated in the elastomeric material.

According to a further preferred embodiment, said inorganic material (b) is exfoliated in the elastomeric material.

For the purposes of the present description and of the claims which follows, the term "intercalated in the elastomeric material" means that the diene elastomeric polymer (a) is disposed between the layers of the layered inorganic material (b) so as to form a nanocomposite of ordered multilayers with alternating polymer/inorganic layers.

For the purposes of the present description and of the claims which follows, the term "exfoliated in the elastomeric material" means that a nanocomposite is formed wherein the layers of said layered inorganic material (b) are individually dispersed throughout the elastomeric material.

The structure of the layered inorganic material (b) may be determined by using X-ray diffraction (XRD) or transmission electron microscopy (TEM). More information about both the morphology and the characterization of said layered inorganic material may be found, for example, in: "Polymer-Silicate Nanocomposites: Model Systems for Confined Polymers and Polymer Brushes", E.P. Giannelis, R. Krishnamoorti, E. Manias, Advances in Polymer Science (1999), Vol. 138, Springer-Verlag, Berlin, Heidelberg, pg.107-147

According to one preferred embodiment, said layered inorganic material (b) exhibits, in the elastomeric material, a d-spacing value in X-ray diffraction analysis of at least 10% higher, preferably of at least 20% higher, with respect to the d-spacing value of the layered inorganic material (b) before dispersing it into the diene elastomeric polymer (a).

For the purpose of the present invention, the variations (%) of the d-spacing values in X-ray diffraction analysis have been calculated as follows. The analysis was carried out by inserting the test samples (the samples were obtained in the manner described in the examples given below) in a Philips Xpert diffractometer, employing analysis radiation of the CuK$\alpha$ type. The data were obtained with a step of 0.04°2$\theta$ and a count of 6 seconds per step in the range 1.4°2$\theta$-32.0°2$\theta$. The d-spacing value was calculated using the following formula:

$$\text{d-spacing} = \lambda/2\sin\theta$$

in which $\lambda$ is the wavelength of the k$\alpha$ radiation of Cu (average of k$\alpha$1 and k$\alpha$2) equal to 1.54178 Å.

The d-spacing value corresponds to the value of the distance between the crystal planes of the layered inorganic

material (b) in the elastomeric material, in particular said value is the average distance between the corresponding surfaces of contiguous layers of the layered inorganic material. The effective distance between the continuous layers is obtained by subtracting the thickness of the individual layer from the d-spacing value.

According to one preferred embodiment, said layered inorganic material (b) is present in the elastomeric material in an amount of from 1 phr to 120 phr, preferably from 5 phr to 80 phr.

For the purposes of the present description and of the claims which follows, the term "phr" means the parts by weight of a given component of the elastomeric material per 100 parts by weight of the diene elastomeric polymer.

According to one preferred embodiment, said at least one layer of elastomeric material has a thickness of between 0.075 mm and 5 mm, preferably between 0.4 mm and 3 mm.

According to one preferred embodiment, said elastomeric material further comprises at least one silane coupling agent (c).

According to one preferred embodiment, the layered inorganic material (b) which may be used in the present invention may be selected, for example, from phyllosilicates such as: smectites, for example, montmorillonite, nontronite, beidellite, volkonskoite, hectorite, saponite, sauconite; vermiculite; halloisite; sericite; or mixtures thereof. Montmorillonite is particularly preferred.

In order to render the layered inorganic material (b) more compatible with the diene elastomeric polymer (a) said layered inorganic material may be surface-treated with a compatibilizer.

According to one preferred embodiment, said compatibilizer may be selected, for example, from the quaternary ammonium or phosphonium salts having general formula (I):

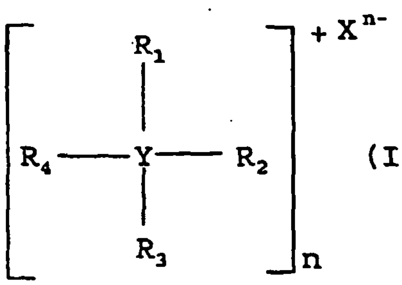

(I)

wherein:

- Y represents N or P;
- $R_1$, $R_2$, $R_3$ and $R_4$, which may be identical or different, represent a linear or branched $C_1$-$C_{20}$ alkyl or hydroxyalkyl group; a linear or branched $C_1$-$C_{20}$ alkenyl or hydroxyalkenyl group; a group -$R_5$-SH or. $R_5$-NH wherein $R_5$ represents a linear or branched $C_1$-$C_{20}$ alkylene group; a $C_6$-$C_{18}$ aryl group; a $C_7$-$C_{20}$ arylalkyl or alkylaryl group; a $C_5$-$C_{18}$ cycloalkyl group, said cycloalkyl group possibly containing hetero atom such as oxygen, nitrogen or sulphur;
- $X^{n-}$ represents an anion such as the chlorine ion, the sulphate ion or the phosphate ion;
- n represents 1, 2 or 3.

Example of layered inorganic material (b) which may be used according to the present invention and is available commercially is the product known by the name of Dellite® 67G from Laviosa Chimica Mineraria S.p.A.

According to one preferred embodiment, the diene elastomeric polymer (a) which may be used in the present invention may be selected from those commonly used in sulphur-crosslinkable elastomeric compositions, that are particularly suitable for producing tyres, that is to say from elastomeric polymers or copolymers with an unsaturated chain having a glass transition temperature ($T_g$) generally below 20°C, preferably in the range of from 0°C to -90°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene,

4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) which may be used in the present invention may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The elastomeric material according to the present invention may optionally comprise at least one elastomeric polymer of one or more monoolefins with an olefinic comonomer or derivatives thereof (a'). The monoolefins may be selected from: ethylene and $\alpha$-olefins generally containing from 3 to 12 carbon atoms, such as, for example, propylene, 1-butene, 1-pentene, 1-hexene, 1-octene, or mixtures thereof. The following are preferred: copolymers between ethylene and an $\alpha$-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a) or an elastomeric polymer (a') functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451 604, or patents US 4 742 124 and US 4 550 142).

As disclosed above, the elastomeric material according to the present invention further comprises at least one silane coupling agent (c).

According to one preferred embodiment, the silane coupling agent (c) which may be used in the present invention may be selected from those having at least one hydrolizable silane group which may be identified, for example, by the following structural formula (II):

$$(R)_3Si\text{-}C_nH_{2n}\text{-}X \qquad (II)$$

in which the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, - $(S)_mC_nH_{2n}\text{-}Si\text{-}(R)_3$ in which m and n are integers between 1 and 6 inclusive and the groups R are defined as above.

Among the coupling agents that are particularly preferred are bis(3-triethoxysilylpropyl) tetrasulphide and bis (3-triethoxysilylpropyl) disulphide. Said coupling agents may be used as such or as a suitable mixture with an inert filler (for example carbon black) so as to facilitate their incorporation into the elastomeric material.

According to one preferred embodiment, said coupling agent (c) is present in the elastomeric material in an amount of from 0.01 phr to 10 phr, preferably from 0.5 phr to 5 phr.

At least one additional reinforcing filler may advantageously be added to the elastomeric material according to the present invention, in an amount generally of from 0.1 phr to 120 phr, preferably from 20 phr to 90 phr. Preferably, the total amount of said at least one additional reinforcing filler and the layered inorganic material (b) is not higher than 120 phr. The reinforcing filler may be selected from those commonly used for crosslinked manufactured products, in particular for tyres, such as, for example, carbon black, silica, alumina, aluminosilicates, calcium carbonate, kaolin, or mixtures thereof.

The types of carbon black which may be used according to the present invention may be selected from those conventionally used in the production of tyres, generally having a surface area of not less than 20 $m^2/g$ (determined by CTAB absorption as described in ISO standard 6810).

The silica which may be used according to the present invention may generally be a pyrogenic silica or, preferably, a precipitated silica, with a BET surface area (measured according to ISO standard 5794/1) of from 50 $m^2/g$ to 500 $m^2/g$, preferably from 70 $m^2/g$ to 200 $m^2/g$.

When a reinforcing filler comprising silica is present, the elastomeric material may advantageously incorporate at least one silane coupling agent (c) capable of interacting with the silica and of linking it to the diene elastomeric polymer during the vulcanization. Examples of silane coupling agent (c) which may be used have been already disclosed

above.

The elastomeric material according to the present invention may be vulcanized according to known techniques, in particular with sulphur-based vulcanizing systems commonly used for diene elastomeric polymers.

The vulcanizing agent most advantageously used is sulphur, or molecules containing sulphur (sulphur donors), with accelerators and activators known to those skilled in the art.

Activators that are particularly effective are zinc compounds, and in particular ZnO, $ZnCO_3$, zinc salts of saturated or unsaturated fatty acids containing from 8 to 18 carbon atoms, such as, for example, zinc stearate, which are preferably formed in situ in the elastomeric material from ZnO and fatty acid, and also BiO, PbO, $Pb_3O_4$, $PbO_2$, or mixtures thereof.

Accelerators that are commonly used may be selected from: dithiocarbamates, guanidine, thiourea, thiazoles, sulphenamides, thiurams, amines, xanthogenates, or mixtures thereof.

The elastomeric material according to the present invention may comprise other commonly used additives selected on the basis of the specific application for which the composition is intended. For example, the following may be added to said composition: antioxidants, anti-ageing agents, adhesives, anti-ozone agents, modifying resins, fibres (for example Kevlar® pulp), or mixtures thereof.

In particular, for the purpose of further improving the- processability, a plasticizer generally selected from mineral oils, vegetable oils, synthetic oils, or mixtures thereof, such as, for example, aromatic oil, naphthenic oil, phthalates, soybean oil, or mixtures thereof, may be added to the elastomeric material according to the present invention. The amount of plasticizer generally ranges from 1 phr to 100 phr, preferably from 5 phr to 50 phr.

The elastomeric material according to the present invention may be prepared by mixing together the diene elastomeric polymer (a) with the layered inorganic material (b), with the additional reinforcing filler and with the other additives optionally present, according to techniques known in the art. The mixing may be carried out, for example, using an open mixer of open-mill type, or an internal mixer of the type with tangential rotors (Banbury) or with interlocking rotors (Intermix), or using continuous mixers of Ko-Kneader type (Buss), or using co-rotating or counter-rotating twin-screw extruders or single-screw extruders.

The present invention will now be illustrated in further detail by means of a number of illustrative embodiments, with reference to the attached Fig. 1-2, which are a view in cross section of a tyre made according to different embodiments of the present invention.

A high-transverse-curvature tyre for two-wheeled vehicles according to the invention has been generally identified by reference number (1).

With reference to Fig. 1, X-X indicates the equatorial plane of the tyre (1).

The tyre (1) comprises a carcass structure (2) comprising at least one carcass ply (3), the opposite lateral edges (3a) of which are associated with respective bead wires (4). The association between the carcass ply (3) and the bead wires (4) is achieved here by folding back the opposite lateral edges (3a) of the carcass ply (3) around the bead wires (4) so as to form the so-called carcass back-folds (3a) as shown in Fig. 1.

Alternatively, the conventional bead wires (4) can be replaced with at least one circumferentially inextensible annular insert formed from elongate element arranged in concentric coils (not represented in Fig. 1) (see, for example, European Patent EP 976 536 and International Patent Application WO 01/54926). In this case, the carcass ply (3) is not back-folded around said annular inserts, the coupling being provided by a second carcass ply (not represented in Fig. 1) applied externally over the first.

The carcass ply (3) generally consists of a plurality of reinforcing cords arranged parallel to each other and at least partially coated with a layer of elastomeric material. These reinforcing cords are usually made of textile fibres, for example rayon, nylon, polyethylene naphthalene-2,6-dicarboxylate (PEN), polyethylene terephthalate (PET), or of steel wires stranded together, coated with a metal alloy (for example copper/zinc, zinc/manganese, zinc/molybdenum/cobalt alloys and the like).

According to a preferred embodiment, the carcass structure (2) is of radial type, i.e. the carcass ply (3) incorporates reinforcing cords arranged in a substantially perpendicular direction relative to a circumferential direction.

Alternatively, the carcass structure (2) comprises a couple of radially inner and radially outer carcass plies (not represented in Fig. 1). In this case, the reinforcing cords are essentially parallel to one another and oriented according to inclined directions in each ply and opposed with respect to the cords of the adjacent ply with respect to the equatorial plane X-X of the tyre (1).

On the external peripheral edge of bead wires (4), an elastomeric filler (5) is applied which fills the space defined between the carcass structure (2) and the corresponding carcass back-folds (3a).

As known, the tyre area comprising bead wires (4) and elastomeric filler (5) forms the so-called bead, globally indicated as (10), intended for anchoring the tyre (1) onto a corresponding mounting rim (not shown in Fig. 1).

A belt structure (6) is applied along the circumference of the carcass structure (2). The belt structure (6) comprises one layer including a plurality of circumferential coils (7a), axially arranged side by side, of a rubberized cord (7) or of a strip of a few rubberized cords (preferably 2 to 5), spirally wound at substantially-null angle from one end to the other of the carcass structure (2). The cords (7) form a plurality of circumferential coils (7a), substantially oriented

according to the rolling direction of the tyre, usually called "zero-degree" arrangement with reference to its position with respect to the equatorial plane X-X the tyre (1).

Preferably, the circumferential coils are wound on the carcass structure (2) according to variable pitch so as to obtain, preferably, a cord thickness higher at opposite side portions that in the central portion of the belt structure (6).

Even though the spiralling by itself and any pitch variability involve a winding angle different from zero, this angle remains so small that it may substantially be considered as always equal to zero degrees.

Usually said cords (7) are textile or metal cords. Preferably, said cords (7) are steel cords, more preferably high elongation (HE) steel cords (see, for example, European Patent EP 461 646).

Preferably, such cords are made of high-carbon (HT) steel wires, i.e. steel wires with a carbon content higher than 0.9%.

When textile cords are used, they may be nylon, rayon, polyethylene naphthalene-2,6-dicarboxylate (PEN), polyethylene terephthalate (PET), aromatic polyamide fibres (e.g. aramide fibres such as, for example, Kevlar®). Alternatively, hybrid cords may be used, constituted by at least one low modulus yarn (e.g. nylon or rayon) twisted with at least one high modulus yarn (e.g. aramide fibres such as, for example, Kevlar®).

Different techniques for winding the cords around the carcass are well known in the art such as disclosed, for example, in the above reported European Patent EP 461 646.

A side wall (11) is also applied externally onto the carcass ply (3), this side wall extending, in an axially external position, from the bead (10) to the end of the belt structure (6).

A tread band (8), whose lateral edges are connected to the side walls (11), is applied circumferentially in a position radially external to the belt structure (6). Externally, the tread band (8), has a rolling surface (8a) designed to come into contact with the ground by means of grooves of various shape so as to define a plurality of blocks of various shapes and sizes distributed over the rolling surface (8a).

In Fig. 1, a layer of a crosslinked elastomeric material (9) according to the present invention, is placed between the belt structure (7) and the carcass ply (3). In Fig. 1, said layer (9) extends over a surface substantially corresponding to the surface of development of said belt structure (6). Alternatively, said layer (9) extends only along at least one portion of the development of said belt structure (6), for instance at opposite side portions of said belt structure (.6) (not represented in Fig. 1).

In the case of tubeless tyres, a rubber layer (not shown in Fig 1) generally known as a "liner", which provides the necessary impermeability to the inflation air of the tyre, may also be provided in a radially internal position relative to the carcass ply (3).

Fig. 2 show the same tyre (1) of Fig. 1 the only difference being the fact that a layer of a crosslinked elastomeric material (9) according to the present invention is interposed between the tread band (8) and the belt structure (6). In Fig. 2, said layer (9) extends over a surface substantially corresponding to the surface of development of said belt structure (6). Alternatively, said layer (9) extends only along at least one portion of the development of said belt structure (6), for instance at opposite side portions of said belt structure (6) (not represented in Fig. 2). Alternatively, a further layer of a crosslinked elastomeric material according to the present invention is placed between the belt structure (7) and the carcass ply (3) (not represented in Fig. 2).

The process for producing the tyre according to the present invention may be carried out according to techniques and using apparatus that are known in the art, as described, for example, in patents EP 461 646 and EP 718 122, said process including at least one step of manufacturing the green tyre and at least one step of vulcanizing this tyre.

More particularly, the process for producing the tyre comprises the steps of preparing, beforehand and separately from each other, a series of semi-finished products corresponding to the various parts of the tyre (carcass plies, belt structure, bead wires, fillers, side walls and tread band) which are then combined together using a suitable manufacturing machine. Next, the subsequent vulcanization step welds the abovementioned semi-finished products together to give a monolithic block, i.e. the finished tyre.

The step of preparing the abovementioned semi-finished products will be preceded by a step of preparing and moulding the various blends, of which said semi-finished products are made, according to conventional techniques.

The green tyre thus obtained is then passed to the subsequent steps of moulding and vulcanization. To this end, a vulcanization mould is used which is designed to receive the tyre being processed inside a moulding cavity having walls which are countermoulded to define the outer surface of the tyre when the vulcanization is complete.

Alternative processes for producing a tyre or parts of a tyre without using semi-finished products are disclosed, for example, in the abovementioned European Patent EP 976 536 and International Patent Application WO 01/54926.

The green tyre may be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding may be carried out without an inflatable vulcanization chamber, by providing inside the tyre a toroidal metal support

shaped according to the configuration of the inner surface of the tyre to be obtained as decribed, for example, in patent EP 242 840. The difference in coefficient of thermal expansion between the toroidal metal support and the crude elastomeric material is exploited to achieve an adequate moulding pressure.

At this point, the step of vulcanizing the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is heated to the vulcanization temperature using the same pressurized fluid used to press the tyre against the walls of the moulding cavity, heated to a maximum temperature of between 100°C and 250°C. The time required to obtain a satisfactory degree of vulcanization throughout the mass of the elastomeric material may vary in general between 3 min and 90 min and depends mainly on the dimensions of the tyre. When the vulcanization is complete, the tyre is removed from the vulcanization mould.

Although the present invention has been illustrated specifically in relation to a tyre, other crosslinked elastomeric manufactured products that may be produced according to the invention may be, for example, conveyor belts, driving belts or flexible tubes.

The present invention will be further illustrated below by means of a number of preparation examples, which are given for purely indicative purposes and without any limitation of this invention.

EXAMPLES 1-3

Preparation of the elastomeric materials

The elastomeric materials given in Table 1 were prepared as follows (the amounts of the various ingredients are given in phr).

All the ingredients, except sulphur, accelerator and retardant, were mixed together in an internal mixer (model Pomini PL 1.6) for about 5 min (1st Step). As soon as the temperature reached 145±5°C, the elastomeric material was discharged. The sulphur, the accelerator and the retardant were then added and mixing was carried out in an open roll mixer (2nd Step).

EXAMPLE 4

Preparation of the elastomeric material

The elastomeric material given in Table 1 was prepared as follows (the amounts of the various components are given in phr).

All the ingredients except sulphur, accelerator and retardant, were fed to a parallel twin-screw (co-rotating) extruder having a length/diameter ratio L/D = 30. After a first pre-mixing step (about 5 minutes), the sulphur, the accelerators and the retardant were added to the extruder. The maximum temperature reached during the extrusion was of 150°C±5°C. The resulting mixture was cooled by water.

TABLE 1

| EXAMPLE | 1 (*) | 2 (*) | 3 | 4 |
|---|---|---|---|---|
| 1st Step | | | | |
| NR | 100 | 88.3 | 100 | 70 |
| N326 | 60 | 60 | 60 | 60 |
| Zinc oxide | 5 | 5 | 5 | 5 |
| Stearic acid | 2 | 2 | 2 | 2 |
| Antioxidant | 2 | 2 | 2 | 2 |
| TESPT | - | - | 2 | 2 |
| Kevlar® | - | 15.2 | - | - |
| Dellite® 67G | - | - | 20 | - |
| Dellite® 67G | - | - | - | 20 |
| 2nd Step | | | | |

(continued)

| | | | | |
|---|---|---|---|---|
| TUBS | 1.6 | 1.6 | 1.6 | 1.6 |
| Sulphur | 3.5 | 3.5 | 3.5 | 3.5 |
| PVI | 0.3 | 0.3 | 0.3 | 0.3 |

(*) : comparative.
NR: natural rubber;
N326: carbon black;
Antioxidant: phenyl-p-phenylenediamine;
TESPT: bis(3-triethoxysilylpropyl)tetrasulfide (X50S comprising 50% of carbon black and 50% of silane - Degussa-Hüls - the reported amount relates to the silane amount);
Kevlar® Engineered Elastomer: blend of 23% by weight of Kevlar® and 77% by weight of natural rubber (DuPont);
Dellite® 67G: organo-modified montmorillonite belonging to the smectite family (Laviosa Chimica Mineraria S.p.A.);
PVI (retardant): N-cyclohexylthiophthalimide (Santogard® PVI - Monsanto).

The Mooney viscosity ML(1+4) at 100°C was measured, according to ISO standard 289/1, on the non-crosslinked materials obtained as described above. The results obtained are given in Table 2.

The static mechanical properties according to ISO standard 37 were measured at different elongation (10%, 50% 100% and 300%) both in the direction of calendering and in the direction perpendicular thereto on samples of said elastomeric materials crosslinked at 170°C for 10 minutes. The result obtained are given in Table 2.

Also given in Table 2 are the hardness in IRHD degrees at 23°C and at 100°C according to ISO standard 48 which were measured on samples of said elastomeric materials crosslinked at 150°C for 30 minutes.

Table 2 also shows the dynamic mechanical properties measured using an Instron dynamic device in the traction-compression mode according to the following methods. A test piece of the crosslinked material having a cylindrical form (length = 25 mm; diameter = 14 mm) compression-preloaded up to 10% longitudinal deformation with respect to the initial length and kept at the prefixed temperature (23°C and 70°C) for the whole duration of the test, was submitted to a dynamic sinusoidal strain with an amplitude ±3.33% with respect to the length under pre-load, with a frequency of 100 Hz. The dynamic mechanical properties are expressed in terms of dynamic elastic modulus (E') and tandelta (loss factor) values. As is known, the tandelta value is calculated as a ratio between the viscous modulus (E") and the elastic modulus (E'), both of them being determined with the above dynamic measurements.

TABLE 2

| EXAMPLE | 1 (*) | 2 (*) | 3 | 4 |
|---|---|---|---|---|
| Viscosity ML (1+4) | 73.0 | 55.2 | 68.7 | 65.9 |
| STATIC MECHANICAL PROPERTIES | | | | |
| DIRECTION OF CALENDERING | | | | |
| 10% Modulus (MPa) | 1.39 | 3.00 | 3.43 | 3.14 |
| 50% Modulus (MPa) | 2.70 | 8.62 | 6.28 | 5.90 |
| 100% Modulus (MPa) | 4.53 | 10.03 | 10.33 | 9.58 |
| 300% Modulus (MPa) | 17.26 | 19.08 | 24.00 | 23.06 |
| Stress at break (MPa) | 23.61 | 19.52 | 24.07 | 24.83 |
| DIRECTION PERPENDICULAR TO CALENDERING | | | | |
| 10% Modulus (MPa) | 1.33 | 1.76 | 3.17 | 2.88 |
| 50% Modulus (MPa) | 2.52 | 3.88 | 5.94 | .5.21 |

(continued)

| DIRECTION PERPENDICULAR TO CALENDERING | | | | |
|---|---|---|---|---|
| 100% Modulus (MPa) | 4.18 | 6.14 | 9.78 | 8.43 |
| 300% Modulus (MPa) | 16.63 | 16.02 | 23.51 | 20.99 |
| Stress at break (MPa) | 23.00 | 17.45 | 23.74 | 22.40 |
| DYNAMIC MECHANICAL PROPERTIES | | | | |
| E' (23°C) | 17.81 | 22.51 | 51.40 | 42.03 |
| E' (70°C) | 14.70 | 17.55 | 38.97 | 32.87 |
| Tan delta (23°C) | 0.2098 | 0.2036 | 0.2912 | 0.2985 |
| Tan delta (70°C) | 0.1529 | 0.1488 | 0.2372 | 0.2377 |
| IRHD hardness at 23°C | 90.60 | 90.30 | 95.25 | 95.90 |
| IRHD hardness at 100°C | 82.20 | 88.00 | 89.90 | 89.90 |
| (*): comparative. | | | | |

The results given in Table 2 show that the layered inorganic material according to the present invention (Examples 3 and 4) gives both a longitudinal and a transversal reinforcement to the elastomeric material. In particular, a transversal reinforcement is higher than transversal reinforcement given by Kevlar® (Example 2).

d-spacing measurement

Using the elastomeric materials obtained in Examples 3 and 4, thin films with thickness of 100 μm were prepared by moulding for 5 minutes at 140°C and at 200 bar.

The films thus obtained were submitted to X-ray diffraction analysis using a Philips Xpert diffractometer and operating as described above. The following d-spacing values were obtained:

- Sample of Example 3 = 41.09 Å;
- Sample of Example 4 = 40.15 Å.

These values, when compared with the d-spacing value of Dellite® 67G in powder form, which was equal to 32.1 Å, show that intercalation of the diene elastomeric polymer in the layererd inorganic material had occurred: in fact, a change in d-spacing value was obtained, equal to 28% for Sample of Example 3 and to 25% for Sample of Example 4.

EXAMPLES 5-6

Evaluation of the performance qualities on the road

Tyres according to Fig. 1 were prepared containing layers of elastomeric material according to Example 2 (Example 5 - reference) and according to Example 3 (Example 6 - according to the present invention) extending over a surface substantially corresponding to the surface of development of the zero-degree belt structure.

The obtained tyres of 180/55 R17 size, were mounted on a BMW touring motorcycle an tested on a racing circuit: the obtained results are given in Table 3.

TABLE 3

| EXAMPLE | 5 (*) | 6 |
|---|---|---|
| Handling | ref. | better than ref. |
| Directional stability | ref. | better than ref. |
| Curve roadholding | ref. | much better than ref. |
| Cornering speed | ref. | much better than ref. |

(continued)

| EXAMPLE | 5 (*) | 6 |
|---|---|---|
| Wear uniformity | ref. | better than ref. |
| (*): reference. | | |

## Claims

1. Tyre (1) for two-wheeled vehicles, comprising:

- a carcass structure (2) with at least one carcass ply (3) shaped in a substantially toroidal configuration, the opposite lateral edges of which are associated with respective right-hand and left-hand bead wires (4), each bead wire being enclosed in a respective bead (10);
- a belt structure (6) applied in a circumferentially external position relative to said carcass structure (2), said belt structure (6) comprising at least one layer of a plurality of circumferential coils (7a) axially arranged side by side, of at least one cord (7) wound at substantially-null angle with respect to the equatorial plane (X-X) of the tyre (1) ;
- a tread band (8) superimposed circumferentially on said belt structure (6);
- a pair of side walls (11) applied laterally on opposite sides relative to said carcass structure (2); **characterized in that**

said at least one layer of a plurality of circumferential coils (7a) is associated with at least one layer of a crosslinked elastomeric material (9) comprising:

(a) at least one diene elastomeric polymer;
(b) at least one layered inorganic material having an individual layer thickness of from 0.01 nm to 30 nm.

2. Tyre for two-wheeled vehicles according to claim 1, wherein said at least one layered inorganic material has an individual layer thickness of from 0.05 nm to 15 nm.

3. Tyre for two-wheeled vehicles according to claim 1, wherein said layered inorganic material is intercalated in the elastomeric material.

4. Tyre for two-wheeled vehicles according to claim 1, wherein said layered inorganic material is exfoliated in the elastomeric material.

5. Tyre for two-wheeled vehicles according to claim 1, wherein said layered inorganic material (b) exhibits, in the elastomeric material, a d-spacing value in X-ray diffraction analysis of at least 10% higher with respect to the d-spacing value of the layered inorganic material (b) before dispersing it into the diene elastomeric polymer (a).

6. Tyre for two-wheeled vehicles according to claim 5, wherein said layered inorganic material (b) exhibits, in the elastomeric material, a d-spacing value in X-ray diffraction analysis of at least 20% higher with respect to the d-spacing value of the layered inorganic material (b) before dispersing it into the diene elastomeric polymer (a).

7. Tyre for two-wheeled vehicles according to claim 1, wherein said at least one layer of a crosslinked elastomeric material is placed between said carcass structure and said at least one layer of a plurality of circumferential coils.

8. Tyre for two-wheeled vehicles according to claim 1, wherein said at least one layer of a crosslinked elastomeric material is placed between said tread band and said at least one layer of a plurality of circumferential coils.

9. Tyre for two-wheeled vehicles according to any one of the preceding claims, wherein said layer of elastomeric material has a thickness of between 0.075 mm and 5 mm.

10. Tyre for two-wheeled vehicles according to claim 9, wherein said layer of elastomeric material has a thickness of between 0.4 mm and 3 mm.

11. Tyre for two-wheeled vehicles according to any one of the preceding claims, wherein the layered inorganic material

(b) is present in the elastomeric material in an amount of from 1 phr to 120 phr.

**12.** Tyre for two-wheeled vehicles according to claim 11, wherein the layered inorganic material (b) is present in the elastomeric material in an amount of from 5 phr to 80 phr.

**13.** Tyre for two-wheeled vehicles according to any one of the preceding claims, wherein the layered inorganic material (b) is selected from phyllosilicates such as: smectites, such as, montmorillonite, nontronite, beidellite, volkonskoite, hectorite, saponite, sauconite; vermiculite; halloisite; sericite; or mixtures thereof.

**14.** Tyre for two-wheeled vehicles according to claim 13, wherein the layered inorganic material (b) is montmorillonite.

**15.** Tyre for two-wheeled vehicles according claim 13 or 14, wherein the layered inorganic material (b) is surface-treated with a compatibilizer.

**16.** Tyre for two-wheeled vehicles according to claim 15, wherein the compatibilizer is selected from the quaternary ammonium or phosphonium salts having general formula (I):

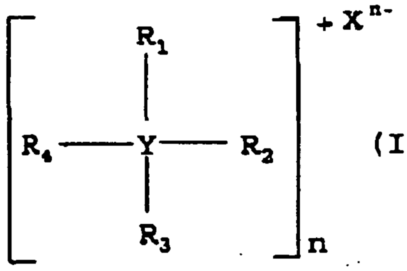

(I)

wherein:

- Y represents N or P;
- $R_1$, $R_2$, $R_3$ and $R_4$, which may be identical or different, represent a linear or branched $C_1$-$C_{20}$ alkyl or hydroxyalkyl group; a linear or branched $C_1$-$C_{20}$ alkenyl or hydroxyalkenyl group; a group -$R_5$-SH or $R_5$-NH wherein $R_5$ represents a linear or branched $C_1$-$C_{20}$ alkylene group; a $C_6$-$C_{18}$ aryl group; a $C_1$-$C_{20}$ arylalkyl or alkylaryl group; a $C_5$-$C_{18}$ cycloalkyl group, said cycloalkyl group possibly containing hetero atom such as oxygen, nitrogen or sulphur;
- $X^{n-}$ represents an anion such as the chlorine ion, the sulphate ion or the phosphate ion;
- n represents 1, 2 or 3.

**17.** Tyre for two-wheeled vehicles according to any one of the preceding claims, wherein the diene elastomeric polymer (a) has a glass transition temperature (Tg) below 20°C.

**18.** Tyre for two-wheeled vehicles according to claim 17, wherein the diene elastomeric polymer (a) is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

**19.** Tyre for two-wheeled vehicles according to any one of the preceding claims, wherein the elastomeric material comprises at least one elastomeric polymer of one or more monoolefins with an olefinic comonomer or derivatives thereof (a').

**20.** Tyre for two-wheeled vehicles according to claim 19, wherein the elastomeric polymer (a') is selected from: ethylene/propylene copolymers or ethylene/propylene/diene copolymers; polyisobutene; butyl rubbers; halobutyl rubbers; or mixtures thereof.

**21.** Tyre for two-wheeled vehicles according to any one of the preceding claim, wherein the elastomeric material further comprises at least one silane coupling agent (c).

**22.** Tyre for two-wheeled vehicles according to claim 21, wherein the silane coupling agent (c) is selected from those having at least one hydrolizable silane group which may be identified by the following structural formula (II):

$$(R)_3Si\text{-}C_nH_{2n}\text{-}X \qquad (II)$$

in which the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, $-(S)_mC_nH_{2n}\text{-}Si\text{-}(R)_3$ in which m and n are integers between 1 and 6 inclusive and the groups R are defined as above.

**23.** Tyre for two-wheeled vehicles according to claim 21 or 22, wherein the silane coupling agent (c) is present in the elastomeric material in an amount of from 0.01 phr to 10 phr.

**24.** Tyre for two-wheeled vehicles according to claim 23, wherein the silane coupling agent (c) is present in an amount of from 0.5 phr to 5 phr.

**25.** Tyre for two-wheeled vehicles according to any one of the preceding claims, wherein at least one additional reinforcing filler is present in an amount of between 0.1 phr and 120 phr in the elastomeric material.

**26.** Tyre for two-wheeled vehicles according to claim 25, wherein the reinforcing filler is carbon black.

**27.** Tyre for two-wheeled vehicles according to claim 25, wherein the reinforcing filler is silica.

**28.** Tyre for two-wheeled vehicles according to claim 27, wherein at least one silane coupling agent (c) is present.

**29.** Process for producing a tyre for two-wheeled vehicles, said process comprising the following steps:

- manufacturing a green tyre by assembling at least one carcass ply, a belt structure in a circumferentially outer position with respect to said carcass ply, said belt structure comprising at least one layer of a plurality of circumferential coils, axially arranged side by side, of at least one cord wound at substantially-null angle with respect to the equatorial plane of the tyre, a tread in a circumferentially outer position with respect to said belt structure;
- subjecting the green tyre to moulding in a mould cavity formed in a vulcanization mould;
- subjecting said green tyre to crosslinking by heating; **characterized in that**

said process further comprises the step of associating at least one layer of a crosslinkable elastomeric material with said at least one layer of a plurality of circumferential coils, said elastomeric material comprising:

(a) at least one diene elastomeric polymer;
(b) at least one layered inorganic material having an individual layer thickness of from 0.01 nm to 30 nm.

**30.** Process according to claim 29, wherein said at least one layered inorganic material has an individual layer thickness of from 0.05 nm to 15 nm.

**31.** Process according to claim 29 or 30, wherein said layered inorganic material is intercalated in the elastomeric material.

**32.** Process according to any one of claim 29 or 30, wherein said layered inorganic material is exfoliated in the elastomeric material.

**33.** Process according to any one of claims 29 to 32, wherein said layer of elastomeric material has a thickness of between 0.075 mm and 5 mm.

**34.** Process according to claim 33, wherein said layer of elastomeric material has a thickness of between 0.4 mm and 3 mm.

**35.** Process according to any one of 29 to 34, wherein said layered inorganic material (b) exhibits, in the elastomeric material, a d-spacing value in X-ray diffraction analysis of at least 10% higher with respect to the d- spacing value of the layered inorganic material (b) before dispersing it into the diene elastomeric polymer (a).

**36.** Process according to claim 35, wherein said layered inorganic material (b) exhibits, in the elastomeric material, a d-spacing value in X-ray diffraction analysis of at least 20% higher with respect to the d-spacing value of the layered inorganic material (b) before dispersing it into the diene elastomeric polymer (a).

**37.** Process according to any one of claims 29 to 36, wherein said at least one layer of crosslinkable elastomeric material is obtained by winding at least one ribbon-like band consisting of said crosslinkable elastomeric material in side by side coils.

**38.** Process according to any one of claims 29 to 37, wherein the layered inorganic material (b) is defined according to any one of claims 11 to 16.

**39.** Process according to any one of claims 29 to 38, wherein the diene elastomeric polymer (a) is defined according to claim 17 or 18.

**40.** Process according to any one of claims 29 to 39, wherein the elastomeric material comprises at least one elastomeric polymer of one or more monoolefins with an olefinic comonomer or derivatives thereof (a') as defined according to claim. 20.

**41.** Process according to any one of claims 29 to 40, wherein the elastomeric composition further comprises at least one coupling agent (c) as defined according to any one of claims 21 to 24.

**42.** Process according to any one of claims 29 to 41, wherein at least one additional reinforcing filler is present, in an amount of between 0.1 phr and 120 phr, in the elastomeric composition.

**43.** Process according to claim 42, wherein the reinforcing filler is carbon black.

**44.** Process according to claim 42, wherein the reinforcing filler is silica.

**45.** Process according to claim 44, wherein at least one silane coupling agent (c) is present.

## Patentansprüche

**1.** Reifen (1) für zweirädrige Kraftfahrzeuge, umfassend:

- einen Karkassenaufbau (2) mit wenigstens einer, im Wesentlichen ringförmige Konfiguration aufweisenden Karkassenzwischenlage (3), deren gegenüberliegende seitliche Kanten mit den entsprechenden rechten und linken Wulstdrähten (4) verbunden sind, wobei jeder Wulstdraht von einem entsprechenden Wulst (10) umschlossen ist;
- einen Gürtelaufbau (6), der in am Umfang äußerer Position im Hinblick auf den Karkassenaufbau (2) aufgebracht ist, wobei der Gürtelaufbau (6) wenigstens eine Schicht einer Vielzahl axial nebeneinander am Umfang angeordneter Wicklungen (7a) aus wenigstens einem Kord (7), der im Wesentlichen unter einem Nullwinkel im Bezug auf die Äquatorialebene (X-X) des Reifens (1) gewunden ist, umfaßt;
- ein am Umfang auf den Gürtelaufbau (6) aufgebrachtes Laufflächenband (8);
- ein Paar von Seitenwänden (11), die lateral auf die gegenüberliegenden Seiten in Bezug auf den Karkassenaufbau (2) aufgebracht sind; **dadurch gekennzeichnet, daß**

die wenigstens eine Schicht aus einer Vielzahl von am Umfang angeordneten Wicklungen (7a) mit wenigstens einer Schicht eines vernetzten Elastomermaterials (9) verbunden ist, umfassend:

(a) wenigstens ein Dienelastomerpolymer;
(b) wenigstens ein geschichtetes anorganisches Material, wobei die Einzelschicht eine Dicke von 0,01 nm bis 30 nm aufweist.

**2.** Reifen für zweirädrige Kraftfahrzeuge nach Anspruch 1, wobei die einzelne Schicht des wenigstens einen geschichteten anorganischen Materials eine Dicke von 0,05 nm bis 15 nm aufweist.

**3.** Reifen für zweirädrige Kraftfahrzeuge nach Anspruch 1, wobei das geschichtete anorganische Material im Elastomermaterial eingebettet ist.

4. Reifen für zweirädrige Kraftfahrzeuge nach Anspruch 1, wobei das geschichtete anorganische Material über das gesamte Elastomermaterial verteilt ist.

5. Reifen für zweirädrige Kraftfahrzeuge nach Anspruch 1, wobei das geschichtete anorganische Material (b) im Elastomermaterial bei der Röntgenbeugungsanalyse einen d-Spacing-Wert aufweist, der um mindestens 10 % über dem des geschichteten anorganischen Materials (b) vor der Dispergierung im Dienelastomerpolymer (a) liegt.

6. Reifen für zweirädrige Kraftfahrzeuge nach Anspruch 5, wobei das geschichtete anorganische Material (b) im Elastomermaterial bei der Röntgenbeugungsanalyse einen d-Spacing-Wert aufweist, der um mindestens 20 % über dem des geschichteten anorganischen Materials (b) vor der Dispergierung im Dienelastomerpolymer (a) liegt.

7. Reifen für zweirädrige Kraftfahrzeuge nach Anspruch 1, wobei die wenigstens eine Schicht eines vernetzten Elastomermaterials zwischen dem Karkassenaufbau und der wenigstens einen Schicht einer Vielzahl von am Umfang angeordneten Wicklungen angeordnet ist.

8. Reifen für zweirädrige Kraftfahrzeuge nach Anspruch 1, wobei die wenigstens eine Schicht eines vernetzten Elastomermaterials zwischen dem Laufflächenband und der wenigstens einen Schicht einer Vielzahl von am Umfang angeordneten Wicklungen angeordnet ist.

9. Reifen für zweirädrige Kraftfahrzeuge nach einem der vorhergehenden Ansprüche, wobei die Schicht des Elastomermaterials eine Dicke zwischen 0,075 mm und 5 mm hat.

10. Reifen für zweirädrige Kraftfahrzeuge nach Anspruch 9, wobei die Schicht des Elastomermaterials eine Dicke zwischen 0,4 mm und 3 mm hat.

11. Reifen für zweirädrige Kraftfahrzeuge nach einem der vorhergehenden Ansprüche, wobei das geschichtete anorganische Material (b) im Elastomermaterial in einer Menge von 1, phr bis 120 phr vorliegt.

12. Reifen für zweirädrige Kraftfahrzeuge nach Anspruch 11, wobei das geschichtete anorganische Material (b) im Elastomermaterial in einer Menge von 5 phr bis 80 phr vorliegt.

13. Reifen für zweirädrige Kraftfahrzeuge nach einem der vorhergehenden Ansprüche, wobei das geschichtete anorganische Material (b) ausgewählt ist unter Blattsilikaten wie Smektiten, wie Montmorillonit, Nontronit, Beidellit, Volkonskoit, Hectorit, Saponit, Sauconit, Vermiculit, Halloisit, Sericit oder Gemischen davon.

14. Reifen für zweirädrige Kraftfahrzeuge nach Anspruch 13, wobei das geschichtete anorganische Material (b) Montmorillonit ist.

15. Reifen für zweirädrige Kraftfahrzeuge nach Anspruch 13 oder 14, wobei das geschichtete anorganische Material (b) mit einem Mittel zur Erhöhung der Verträglichkeit, oberflächenbehandelt ist.

16. Reifen für zweirädrige Kraftfahrzeuge nach Anspruch 15, bei dem das Mittel zur Erhöhung der Verträglichkeit ausgewählt ist aus quarternären Ammonium- oder Phosphoniumsalzen der allgemeinen Formel I:

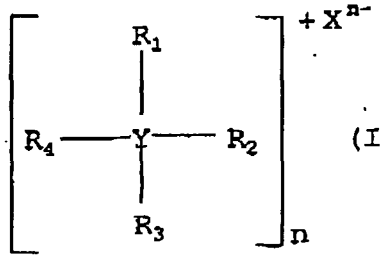

(I)

worin

- Y N oder P bedeutet;
- $R^1$, $R^2$, $R^3$ und $R^4$, jeweils gleich oder unterschiedlich, eine unverzweigte oder verzweigte $C_{1-20}$-Alkyl- oder -Hydroxyalkylgruppe, eine unverzweigte oder verzweigte $C_{1-20}$-Alkenyl- oder -Hydroxyalkenylgruppe, eine Gruppe -$R^5$-SH oder $R^5$-NH, worin $R^5$ für eine unverzweigte oder verzweigte $C_{1-20}$-Alkylengruppe steht; eine $C_{6-18}$-Arylgruppe; eine $C_{7-20}$-Arylalkyl- oder Alkylarylgruppe; eine $C_{5-18}$-Cycloalkylgruppe, die gegebenenfalls ein Heteroatom wie Sauerstoff, Stickstoff oder Schwefel enthält, bedeuten;
- $X^{n-}$ ein Anion wie das Chlor-, Sulfat- oder Phosphation bedeutet und
- n 1, 2 oder 3 bedeutet.

**17.** Reifen für zweirädrige Kraftfahrzeuge nach einem der vorhergehenden Ansprüche, bei dem das Dienelastomerpolymer (a) eine Glasumwandlungstemperatur (Tg) von unter 20° C aufweist.

**18.** Reifen für zweirädrige Kraftfahrzeuge nach Anspruch 17, bei dem das Dienelastomerpolymer (a) ausgewählt ist aus cis-1,4-Polyisopren, 3,4-Polyisopren, Polybutadien, gegebenenfalls halogenierten Isopren-Isobuten-, 1,3-Butadien-Acrylnitril-, Styrol-1,3-Butadien-, Styrol-Isopren-1,3-Butadien-, Styrol-1,3-Butadien-Acrylnitril-Copolymeren oder Gemischen davon.

**19.** Reifen für zweirädrige Kraftfahrzeuge nach einem der vorhergehenden Ansprüche, bei dem das Elastomermaterial wenigstens ein Elastomerpolymer aus einem oder mehreren Monoolefinen mit einem Olefincomonomer oder Derivaten davon (a') umfaßt.

**20.** Reifen für zweirädrige Kraftfahrzeuge nach Anspruch 19, bei dem das Elastomerpolymer (a') ausgewählt ist aus Ethylen-Propylen-Copolymeren oder Ethylen-Prvpoylen-Dien-Copolymeren, Polyisobuten, Butylkautschuken, Halobutylkautschuken oder Gemischen davon.

**21.** Reifen für zweirädrige Kraftfahrzeuge nach einem der vorhergehenden Ansprüche, bei dem das Elastomermaterial außerdem wenigstens ein Silankupplungsmittel (c) umfaßt.

**22.** Reifen für zweirädrige Kraftfahrzeuge nach Anspruch 21, bei dem das Silankupplungsmittel (c) ausgewählt ist unter solchen, die wenigstens eine hydrolysierbare Silangruppe umfassen, die durch die folgende Strukturformel (II) identifiziert werden kann:

$$(R)^3Si\text{-}C_nH_{2n}\text{-}X \qquad (II)$$

worin die Gruppen R, gleich oder unterschiedlich, ausgewählt sind unter Alkyl-, Alkoxy- oder Aryloxygruppen oder aus Halogenatomen, unter der Bedingung, daß wenigstens eine der Gruppen R eine Alkoxy- oder Aryloxygruppe ist, n eine ganze Zahl zwischen 1 und 6 bedeutet, und X für eine Gruppe, ausgewählt unter Nitroso, Mercapto, Amino, Epoxid, Vinyl, Imid, Chlor und $-(S)_mC_nH_{2n}-Si-(R)^3$, worin m und n ganze Zahlen zwischen 1 und 6 bedeuten, steht, und die Gruppen R wie oben definiert sind.

**23.** Reifen für zweirädrige Kraftfahrzeuge nach Anspruch 21 oder 22, wobei das Silankupplungsmittel (c) im Elastomermaterial in einer Menge von 0,01 phr bis 10 phr vorliegt.

**24.** Reifen für zweirädrige Kraftfahrzeuge nach Anspruch 23, wobei das Silankupplungsmittel (c) im Elstomermaterial in einer Menge von 0,5 phr bis 5 phr vorliegt.

**25.** Reifen für zweirädrige Kraftfahrzeuge nach einem der vorhergehenden Ansprüche, wobei wenigstens ein zusätzlicher Verstärkungsfüller in einer Menge zwischen 0,1 phr und 120 phr im Elastomermaterial vorliegt.

**26.** Reifen für zweirädrige Kraftfahrzeuge nach Anspruch 25, wobei der Verstärkungsfüller Ruß ist.

**27.** Reifen für zweirädrige Kraftfahrzeuge nach Anspruch 25, wobei der Verstärkungs füller Kieselerde ist.

**28.** Reifen für zweirädrige Kraftfahrzeuge nach Anspruch 27, wobei wenigstens ein Silankupplungsmittel (c) vorliegt.

**29.** Verfahren zur Herstellung eines Reifens für zweirädrige Kraftfahrzeuge, wobei das Verfahren die folgenden Stufen

umfaßt:

- Herstellung eines Rohlings durch Zusammenbau wenigstens einer Karkassenzwischenlage mit einem Gürtelaufbau in am Umfang äußerer Position im Hinblick auf die Karkassenzwischenlage, wobei der Gürtelaufbau wenigstens eine Schicht einer Vielzahl axial nebeneinander am Umfang angeordneter Wicklungen aus wenigstens einem Kord, der im Wesentlichen unter einem Nullwinkel im Bezug auf die Äquatorialebene des Reifens gewunden ist und einer Lauffläche in am Umfang äußerer Position im Hinblick auf den Gürtelaufbau umfaßt,
- Formen des Rohlings in einem Formhohlraum in einer Vulkanisationsform und
- Vernetzung des Rohlings durch Erwärmen, **dadurch gekennzeichnet, daß** das Verfahren außerdem noch die Stufe der Verbindung wenigstens einer Schicht eines vernetzbaren Elastomermaterials mit wenigstens einer Schicht einer Vielzahl am Umfang angeordneter Wicklungen umfaßt, wobei das Elastomermaterial,

  (a) wenigstens ein Dienelastomerpolymer und
  (b) wenigstens ein geschichtetes anorganisches Material, wobei die Einzelschicht eine Dicke von 0,01 nm bis 30 nm aufweist, umfaßt.

**30.** Verfahren nach Anspruch 29, wobei die einzelne Schicht des wenigstens einen geschichteten anorganischen Materials eine Dicke von 0,05 nm bis 15 nm aufweist.

**31.** Verfahren nach Anspruch 29 oder 30, wobei das geschichtete anorganische Material im Elastomermaterial eingebettet ist.

**32.** Verfahren nach Anspruch 29 oder 30, wobei das geschichtete anorganische Material über das gesamte Elastomermaterial verteilt ist.

**33.** Verfahren nach einem der vorhergehenden Ansprüche 29 bis 32, wobei die Schicht des Elastomermaterials eine Dicke zwischen 0,075 mm und 5 mm hat.

**34.** Verfahren nach Anspruch 33, wobei die Schicht des Elastomermaterials eine Dicke zwischen 0,4 mm und 3 mm hat.

**35.** Verfahren nach einem der Ansprüche 29 bis 34, wobei das geschichtete anorganische Material (b) im Elastomermaterial bei der Röntgenbeugungsanalyse einen d-Spacing-Wert aufweist, der um mindestens 10 % über dem des geschichteten anorganischen Materials (b) vor der Dispergierung im Dienelastomerpolymer (a) liegt.

**36.** Verfahren nach Anspruch 35, wobei das geschichtete anorganische Material (b) im Elastomermaterial bei der Röntgenbeugungsanalyse einen d-Spacing-Wert aufweist, der um mindestens 20 % über dem des geschichteten anorganischen Materials (b) vor der Dispergierung im Dienelastomerpolymer (a) liegt.

**37.** Verfahren nach einem der Ansprüche 29 bis 36, wobei die wenigstens eine Schicht aus vernetzbarem Elastomermaterial erhalten wird durch Aufwickeln wenigstens eines aus dem vernetzbaren Elastomermaterial bestehenden Bandes in nebeneinander angeordneten Wickeln.

**38.** Verfahren nach einem der Ansprüche 29 bis 37, wobei das geschichtete anorganische Material (b) nach einem der Ansprüche 11 bis 16 definiert ist.

**39.** Verfahren nach einem der Ansprüche 29 bis 38, wobei das Dienelastomerpolymer (a) nach Anspruch 17 oder 18 definiert ist.

**40.** Verfahren nach einem der Ansprüche 29 bis 39, bei dem das Elastoroermaterial wenigstens ein Elastomerpolymer aus einem oder mehreren Monoolefinen mit einem Olefincomonomer oder Derivaten davon (a') umfaßt, definiert nach Anspruch 20.

**41.** Verfahren nach einem der Ansprüche 29 bis 40, wobei das Elastomergemisch außerdem noch wenigstens ein Kupplungsmittel (c), wie in einem der Ansprüche 21 bis 24 definiert, umfaßt.

**42.** Verfahren nach einem der Ansprüche 29 bis 41, wobei wenigstens ein zusätzlicher Verstärkungsfüller in einer Menge zwischen 0,1 phr und 120 phr im Elastomergemisch vorliegt.

**43.** Verfahren nach Anspruch 42, wobei der Verstärkungsfüller Ruß ist.

**44.** Verfahren nach Anspruch 42, wobei der Verstärkungsfüller Kieselerde ist.

**45.** Verfahren nach Anspruch 44, wobei wenigstens ein Silankupplungsmittel (c) vorliegt.

## Revendications

**1.** Pneumatique (1) pour véhicule à deux roues, comprenant :

- une structure de carcasse (2) comportant au moins une nappe (3) de carcasse, de forme sensiblement toroïdale, dont les bords latéraux opposés sont associés à des tringles (4) respectives, une droite et une gauche, chacune de ces tringles étant respectivement enfermée dans le talon (10) correspondant ;
- une structure de ceinture (6) appliquée sur le pourtour externe de ladite structure de carcasse (2), laquelle structure de ceinture (6) comprend au moins une couche formée de plusieurs spires (7a) circonférentielles, disposées côte à côte dans la direction axiale, d'au moins un câble enroulé dans un plan qui fait un angle pratiquement nul avec le plan équatorial (X-X) du pneumatique (1) ;
- une bande de roulement (8) superposée sur le pourtour de ladite structure de ceinture (6) ;
- et une paire de flancs (11) appliqués latéralement sur les côtés opposés de ladite structure de carcasse (2) ;

**caractérisé en ce que** ladite couche, au nombre d'au moins une, formée de plusieurs spires circonférentielles est associée avec au moins une couche d'un matériau élastomère réticulé (9) comprenant :

a) au moins un polymère élastomère à base de diène,
b) et au moins une matière inorganique à structure en couches, dont chaque couche présente individuellement une épaisseur de 0,01 à 30 nm.

**2.** Pneumatique pour véhicule à deux roues, conforme à la revendication 1, dans lequel chaque couche de ladite matière inorganique à structure en couches, au nombre d'au moins une, présente individuellement une épaisseur de 0,05 à 15 nm.

**3.** Pneumatique pour véhicule à deux roues, conforme à la revendication 1, dans lequel ladite matière inorganique à structure en couches se trouve intercalée au sein du matériau élastomère.

**4.** Pneumatique pour véhicule à deux roues, conforme à la revendication 1, dans lequel ladite matière inorganique à structure en couches se trouve réduite à l'état de lamelles au sein du matériau élastomère.

**5.** Pneumatique pour véhicule à deux roues, conforme à la revendication 1, dans lequel ladite matière inorganique à structure en couches (b) présente, au sein du matériau élastomère, une valeur de l'écartement d, déterminée par analyse par diffraction de rayons X, qui est d'au moins 10 % supérieure à la valeur de cet écartement d dans la matière inorganique à structure en couches (b) avant dispersion de celle-ci dans le polymère élastomère de diène (a).

**6.** Pneumatique pour véhicule à deux roues, conforme à la revendication 5, dans lequel ladite matière inorganique à structure en couches (b) présente, au sein du matériau élastomère, une valeur de l'écartement d, déterminée par analyse par diffraction de rayons X, qui est d'au moins 20 % supérieure à la valeur de cet écartement d dans la matière inorganique à structure en couches (b) avant dispersion de celle-ci dans le polymère élastomère de diène (a).

**7.** Pneumatique pour véhicule à deux roues, conforme à la revendication 1, dans lequel ladite couche, au nombre d'au moins une, de matériau élastomère réticulé se trouve placée entre ladite structure de carcasse et ladite couche, au nombre d'au moins une, formée de plusieurs spires circonférentielles.

**8.** Pneumatique pour véhicule à deux roues, conforme à la revendication 1, dans lequel ladite couche, au nombre d'au moins une, de matériau élastomère réticulé se trouve placée entre ladite bande de roulement et ladite couche, au nombre d'au moins une, formée de plusieurs spires circonférentielles.

**9.** Pneumatique pour véhicule à deux roues, conforme à l'une des revendications précédentes, dans lequel ladite couche de matériau élastomère est épaisse de 0,075 à 5 mm.

**10.** Pneumatique pour véhicule à deux roues, conforme à la revendication 9, dans lequel ladite couche de matériau élastomère est épaisse de 0,4 à 3 mm.

**11.** Pneumatique pour véhicule à deux roues, conforme à l'une des revendications précédentes, dans lequel ladite matière inorganique à structure en couches (b) se trouve présente, au sein du matériau élastomère, en une proportion de 1 à 120 pcpr (parties pour cent parties de résine).

**12.** Pneumatique pour véhicule à deux roues, conforme à la revendication 11, dans lequel ladite matière inorganique à structure en couches (b) se trouve présente, au sein du matériau élastomère, en une proportion de 5 à 80 pcpr.

**13.** Pneumatique pour véhicule à deux roues, conforme à l'une des revendications précédentes, pour lequel la matière inorganique à structure en couches (b) est choisie parmi des phyllosilicates, comme des smectites telles que les montmorillonite, nontronite, beidellite, volkonskoïte, hectorite, saponite et sauconite, la vermicullite, l'halloysite, et la séricite, ainsi que leurs mélanges.

**14.** Pneumatique pour véhicule à deux roues, conforme à la revendication 13, dans lequel la matière inorganique à structure en couches (b) est de la montmorillonite.

**15.** Pneumatique pour véhicule à deux roues, conforme à la revendication 13 ou 14, pour lequel la matière inorganique à structure en couches (b) a subi un traitement de surface effectué avec un agent de compatibilisation.

**16.** Pneumatique pour véhicule à deux roues, conforme à la revendication 15, pour lequel l'agent de compatibilisation est choisi parmi les sels d'ammonium quaternaire ou de phosphonium quaternaire de formule générale (I) :

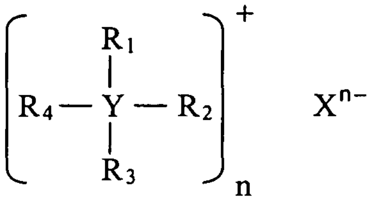

(I)

dans laquelle :

- Y représente un atome d'azote ou de phosphore ;
- $R_1$, $R_2$, $R_3$ et $R_4$ représentent des entités qui peuvent être identiques ou différentes et qui sont des groupes alkyle ou hydroxyalkyle en $C_{1-20}$, à chaîne linéaire ou ramifiée, des groupes alcényle ou hydroxyalcényle en $C_{1-20}$, à chaîne linéaire ou ramifiée, des groupes de formule $-R_5-SH$ ou $-R_5-NH$ où $R_5$ représente un groupe alcanediyle en $C_{1-20}$, à chaîne linéaire ou ramifiée, des groupes aryle en $C_{6-18}$, des groupes aryl-alkyle ou alkyl-aryle en $C_{7-20}$, ou des groupes cycloalkyle en $C_{5-18}$, lesquels groupes cycloalkyle peuvent comporter un hétéroatome comme un atome d'oxygène, d'azote ou de soufre ;
- $X^{n-}$ représente un anion, comme l'ion chlorure, l'ion sulfate ou l'ion phosphate ;
- et n représente le nombre 1, 2 ou 3.

**17.** Pneumatique pour véhicule à deux roues, conforme à l'une des revendications précédentes, dans lequel la température de transition vitreuse $T_g$ du polymère élastomère (a) à base de diène est inférieure à 20 °C.

**18.** Pneumatique pour véhicule à deux roues, conforme à la revendication 17, pour lequel le polymère élastomère (a) à base de diène est choisi parmi les suivants : cis-1,4-polyisoprène, 3,4-polyisoprène, polybutadiène, copolymères d'isoprène et d'isobutène éventuellement halogénés, copolymères de 1,3-butadiène et d'acrylonitrile, copolymères de styrène et de 1,3-butadiène, copolymères de styrène, d'isoprène et de 1,3-butadiène, et copolymères de styrène, de 1,3-butadiène et d'acrylonitrile, ainsi que les mélanges de tels polymères.

**19.** Pneumatique pour véhicule à deux roues, conforme à l'une des revendications précédentes, dans lequel le matériau élastomère comprend au moins un polymère élastomère (a') d'une ou plusieurs monooléfines et d'un comonomère oléfinique, ou un dérivé d'un tel polymère.

**20.** Pneumatique pour véhicule à deux roues, conforme à la revendication 19, pour lequel le polymère élastomère (a') est choisi parmi les suivants : copolymères d'éthylène et de propylène, copolymères d'éthylène, de propylène et de diène, polyisobutène, caoutchoucs butyl, et caoutchoucs butyl halogénés, ainsi que les mélanges de tels polymères.

**21.** Pneumatique pour véhicule à deux roues, conforme à l'une des revendications précédentes, dans lequel le matériau élastomère comprend en outre au moins un agent de couplage de type silane (c).

**22.** Pneumatique pour véhicule à deux roues, conforme à la revendication 19, pour lequel l'agent de couplage de type silane (c) est choisi parmi ceux qui comportent au moins un groupe silyle hydrolysable, et qui peuvent donc être représentés par la formule suivante :

$$(R)_3Si\text{-}C_nH_{2n}\text{-}X \qquad (II)$$

dans laquelle :

- les entités représentées par R, qui peuvent être identiques ou différentes, sont choisies parmi les groupes alkyle, alcoxy et aryloxy et les atomes d'halogène, sous réserve que l'une au moins de ces entités représentées par R soit un groupe alcoxy ou aryloxy,
- l'indice n est un nombre entier qui vaut de 1 à 6, bornes comprises,
- et X représente une entité choisie parmi les groupes nitroso, sulfanyle, amino, époxyde, vinyle et imido, un atome de chlore et les groupes de formule $-(S)_m-C_nH_{2n}-Si-(R)_3$ où les indices m et n sont des nombres entiers qui valent de 1 à 6, bornes comprises, et les symboles R ont les significations indiquées ci-dessus.

**23.** Pneumatique pour véhicule à deux roues, conforme à la revendication 21 ou 22, dans lequel l'agent de couplage de type silane (c) se trouve présent, dans le matériau élastomère, en une proportion de 0,1 à 10 pcpr (parties pour 100 parties de résine).

**24.** Pneumatique pour véhicule à deux roues, conforme à la revendication 23, dans lequel l'agent de couplage de type silane (c) se trouve en une proportion de 0,5 à 5 pcpr.

**25.** Pneumatique pour véhicule à deux roues, conforme à l'une des revendications précédentes, dans lequel il y a, dans le matériau élastomère, au moins une charge renforçante supplémentaire qui se trouve en une proportion de 0,1 à 120 pcpr.

**26.** Pneumatique pour véhicule à deux roues, conforme à la revendication 25, dans lequel la charge renforçante est un noir de carbone.

**27.** Pneumatique pour véhicule à deux roues, conforme à la revendication 25, dans lequel la charge renforçante est une silice.

**28.** Pneumatique pour véhicule à deux roues, conforme à la revendication 27, dans lequel se trouve présent au moins un agent de couplage de type silane (c).

**29.** Procédé de production d'un pneumatique pour véhicule à deux roues, lequel procédé comporte les étapes suivantes :

- fabriquer un pneumatique cru en assemblant au moins une nappe de carcasse, une structure de ceinture appliquée sur le pourtour externe de ladite structure de carcasse, laquelle structure de ceinture comprend au moins une couche formée de plusieurs spires circonférentielles, disposées côte à côte dans la direction axiale, d'au moins un câble enroulé dans un plan qui fait un angle pratiquement nul avec le plan équatorial du pneumatique, et une bande de roulement superposée sur le pourtour de ladite structure de ceinture ;
- soumettre ce pneumatique cru à une opération de moulage, effectuée dans une cavité de moule formée dans un moule de vulcanisation ;
- et soumettre ce pneumatique cru à une opération de réticulation effectuée par chauffage ;

et lequel procédé est **caractérisé en ce qu'**il comporte en outre une étape où l'on associe au moins une couche de matériau élastomère réticulable avec ladite couche, au nombre d'au moins une, formée de plusieurs spires circonférentielles, lequel matériau élastomère comprend :

a) au moins un polymère élastomère à base de diène,
b) et au moins une matière inorganique à structure en couches, dont chaque couche présente individuellement une épaisseur de 0,01 à 30 nm.

**30.** Procédé conforme à la revendication 29, dans lequel chaque couche de ladite matière inorganique à structure en couches, au nombre d'au moins une, présente individuellement une épaisseur de 0,05 à 15 nm.

**31.** Procédé conforme à la revendication 29 ou 30, dans lequel ladite matière inorganique à structure en couches se trouve intercalée au sein du matériau élastomère.

**32.** Procédé conforme à la revendication 29 ou 30, dans lequel ladite matière inorganique à structure en couches se trouve réduite à l'état de lamelles au sein du matériau élastomère.

**33.** Procédé conforme à l'une des revendications 29 à 32, dans lequel ladite couche de matériau élastomère est épaisse de 0,075 à 5 mm.

**34.** Procédé conforme à la revendication 33, dans lequel ladite couche de matériau élastomère est épaisse de 0,4 à 3 mm.

**35.** Procédé conforme à l'une des revendications 29 à 34, dans lequel ladite matière inorganique à structure en couches (b) présente, au sein du matériau élastomère, une valeur de l'écartement d, déterminée par analyse par diffraction de rayons X, qui est d'au moins 10 % supérieure à la valeur de cet écartement d dans la matière inorganique à structure en couches (b) avant dispersion de celle-ci dans le polymère élastomère de diène (a).

**36.** Procédé conforme à la revendication 33, dans lequel ladite matière inorganique à structure en couches (b) présente, au sein du matériau élastomère, une valeur de l'écartement d, déterminée par analyse par diffraction de rayons X, qui est d'au moins 20 % supérieure à la valeur de cet écartement d dans la matière inorganique à structure en couches (b) avant dispersion de celle-ci dans le polymère élastomère de diène (a).

**37.** Procédé conforme à l'une des revendications 29 à 36, dans lequel on obtient ladite couche, au nombre d'au moins une, de matériau élastomère réticulable en enroulant, en spires disposées côte à côte, au moins une bande en forme de ruban, faite de ce matériau élastomère réticulable.

**38.** Procédé conforme à l'une des revendications 29 à 37, dans lequel la matière inorganique à structure en couches (b) présente les caractéristiques définies dans l'une des revendications 11 à 16.

**39.** Procédé conforme à l'une des revendications 29 à 38, dans lequel le polymère élastomère à base de diène (a) présente les caractéristiques définies dans la revendication 17 ou 18.

**40.** Procédé conforme à l'une des revendications 29 à 39, dans lequel le matériau élastomère comprend au moins un polymère élastomère (a') d'une ou plusieurs monooléfines et d'un comonomère oléfinique, ou un dérivé d'un tel polymère, tel que défini dans la revendication 20.

**41.** Procédé conforme à l'une des revendications 29 à 40, dans lequel la composition élastomère comprend en outre au moins un agent de couplage (c), tel que défini dans l'une des revendications 21 à 24.

**42.** Procédé conforme à l'une des revendications 29 à 41, dans lequel il y a, dans la composition élastomère, au moins une charge renforçante supplémentaire qui se trouve en une proportion de 0,1 à 120 pcpr.

**43.** Procédé conforme à la revendication 42, dans lequel la charge renforçante est un noir de carbone.

**44.** Procédé conforme à la revendication 42, dans lequel la charge renforçante est une silice.

**45.** Procédé conforme à la revendication 44, dans lequel il y a au moins un agent de couplage de type silane (c).

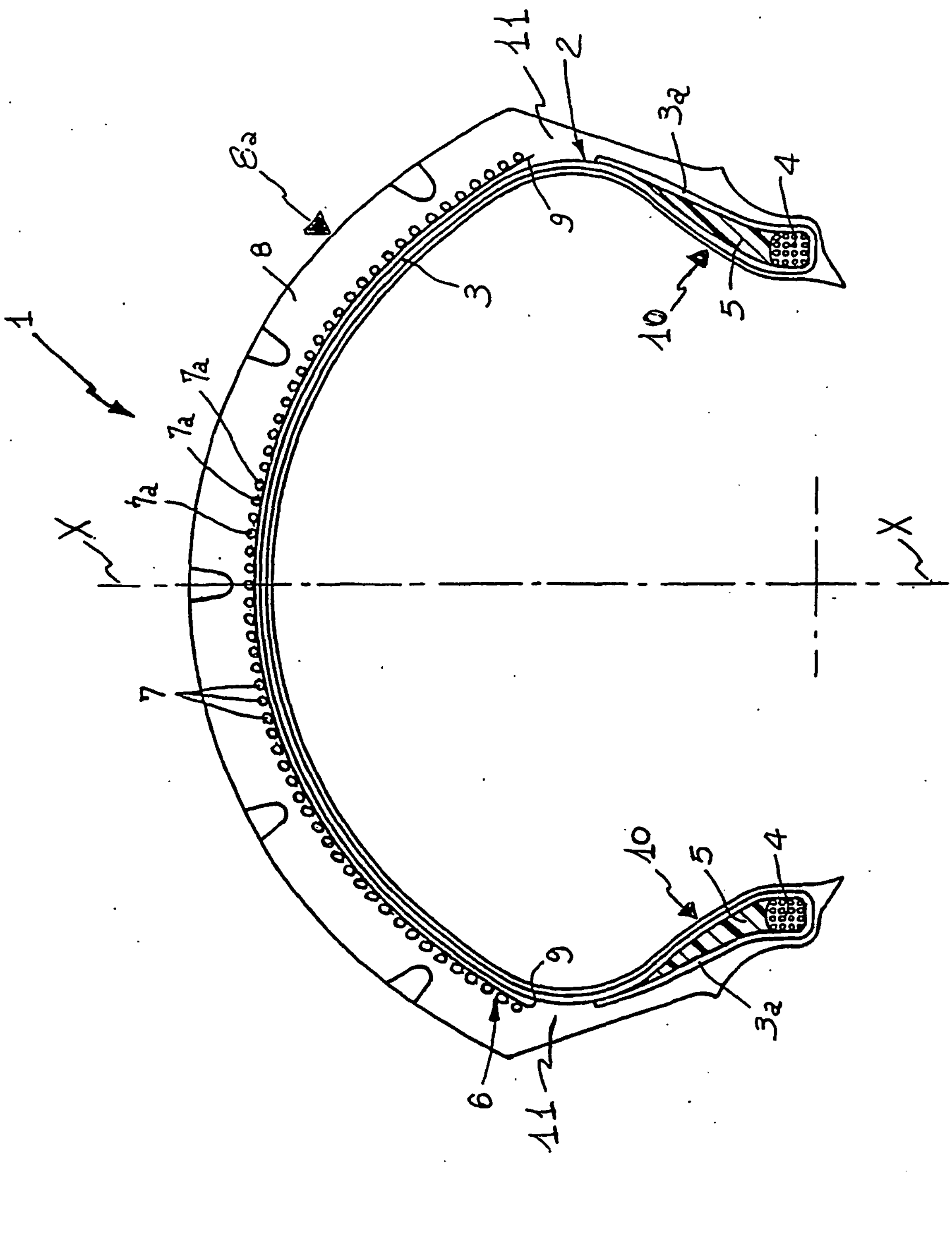


Fig. 1

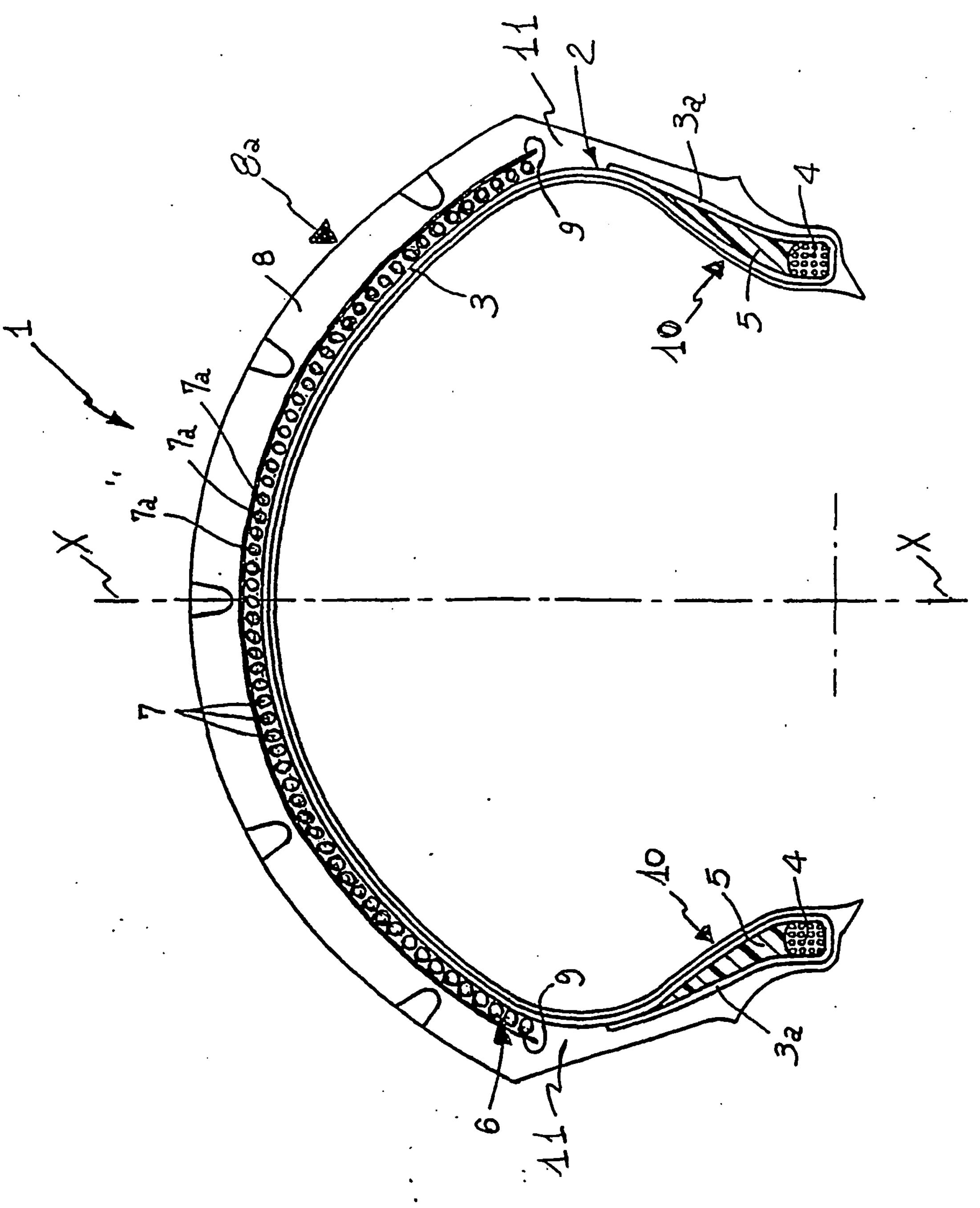


Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 703102 A
- GB 2283215 A
- EP 1193085 A
- EP 747323 A
- EP 756949 A
- US 6412533 B
- WO 0136185 A
- EP 976536 A
- EP 451604 A
- US 4742124 A
- US 4550142 A
- WO 0154926 A
- EP 461646 A
- EP 718122 A
- EP 242840 A


### Non-patent literature cited in the description


- Polymer-Silicate Nanocomposites: Model Systems for Confined Polymers and Polymer Brushes. **E.P. GIANNELIS ; R. KRISHNAMOORTI ; E. MANIAS.** Advances in Polymer Science. Springer-Verlag, 1999, vol. 138, 107-147